# EUROPEAN PATENT APPLICATION

(11) **EP 4 325 961 A1**
(43) Date of publication of application: **21.02.2024**
(21) Application number: 22807794.7
(22) Date of filing: 10.05.2022
(51) Int. Cl.: H04W 72/02, H04W 72/04, H04W 4/40, H04W 28/26, H04W 72/10, H04W 76/28, H04W 92/18

(54) **METHOD AND DEVICE FOR OPERATING SL DRX TIMER IN NR V2X**

(30) Priority: 10.05.2021 US 202163186765 P; 11.05.2021 US 202163187393 P
(71) Applicant: LG Electronics Inc., Yeongdeungpo-gu Seoul 07336 (KR)
(72) Inventor: LEE, Seungmin, Seoul 06772 (KR); SEO, Hanbyul, Seoul 06772 (KR); PARK, Giwon, Seoul 06772 (KR)
(74) Representative: Plasseraud IP
(86) International application number: PCT/KR2022/006669
(87) International publication number: WO 2022/240146

(57) **Abstract**

An operating method of a first device (100) in a wireless communication system is presented. The method may comprise the steps of: transmitting, to a second device (200), SCI including resource-related information, on the basis of a first resource, the resource-related information comprising information related to the next resource of the first resource; receiving collision information from the second device (200); and reselecting, on the basis of the collision information, a resource from a set of candidate resources from which the next resource of the first resource is excluded.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

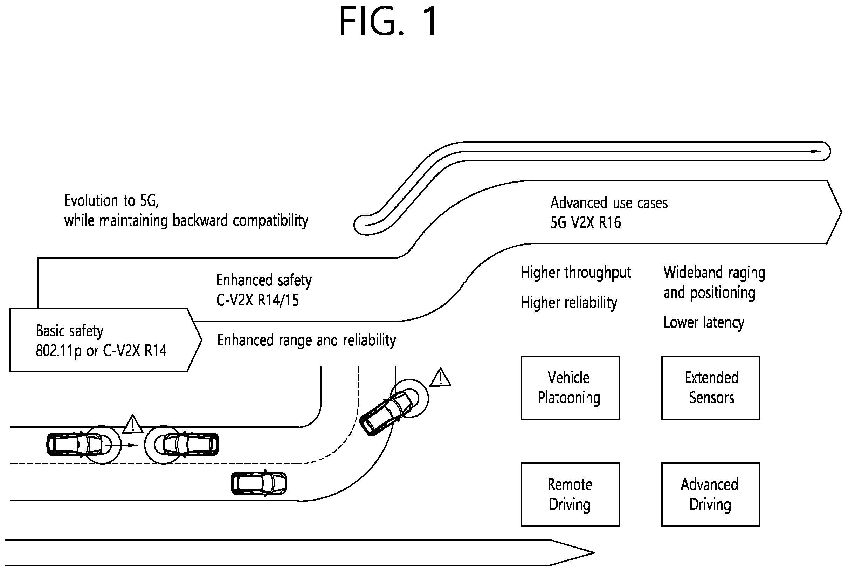

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like.

### DISCLOSURE

### TECHNICAL SOLUTION

According to an embodiment of the present disclosure, a method for performing, by a first device, wireless communication may be proposed. For example, the method may comprise: transmitting, to a second device, sidelink control information, SCI, including information related to a resource, based on a first resource, wherein the information related to the resource may include information related to a next resource of the first resource; receiving, from the second device, conflict information; and reselecting a resource from a candidate resource set from which the next resource of the first resource is excluded, based on the conflict information.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: transmit, to a second device, sidelink control information, SCI, including information related to a resource, based on a first resource, wherein the information related to the resource may include information related to a next resource of the first resource; receive, from the second device, conflict information; and reselect a resource from a candidate resource set from which the next resource of the first resource is excluded, based on the conflict information.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: transmit, to a second LTE, sidelink control information, SCI, including information related to a resource, based on a first resource, wherein the information related to the resource may include information related to a next resource of the first resource; receive, from the second UE, conflict information; and reselect a resource from a candidate resource set from which the next resource of the first resource is excluded, based on the conflict information.

According to an embodiment of the present disclosure, a non-transitory computer-readable storage medium storing instructions may be proposed. For example, the instructions, when executed, may cause a first device to: transmit, to a second device, sidelink control information, SCI, including information related to a resource, based on a first resource, wherein the information related to the resource may include information related to a next resource of the first resource; receive, from the second device, conflict information; and reselect a resource from a candidate resource set from which the next resource of the first resource is excluded, based on the conflict information.

According to an embodiment of the present disclosure, a method for performing, by a second device, wireless communication may be proposed. For example, the method may comprise: receiving, from a first device, sidelink control information, SCI, including information related to a resource, based on a first resource, wherein the information related to the resource may include information related to a next resource of the first resource; determining a conflict related to the next resource of the first resource; generating conflict information, based on the conflict related to the next resource of the first resource; and transmitting, to the first device, the conflict information, wherein the next resource of the first resource may be excluded from a candidate resource set, based on the conflict information, and wherein resource reselection may be performed based on the candidate resource set from which the next resource of the first resource is excluded.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: receive, from a first device, sidelink control information, SCI, including information related to a resource, based on a first resource, wherein the information related to the resource may include information related to a next resource of the first resource; determine a conflict related to the next resource of the first resource; generate conflict information, based on the conflict related to the next resource of the first resource; and transmit, to the first device, the conflict information, wherein the next resource of the first resource may be excluded from a candidate resource set, based on the conflict information, and wherein resource reselection may be performed based on the candidate resource set from which the next resource of the first resource is excluded.

### ADVANTAGEOUS EFFECTS

The user equipment (LTE) can efficiently perform SL communication.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a LTE performing V2X or SL communication, based on an embodiment of the present disclosure.
FIG. 8 shows a procedure of performing V2X or SL communication by a LTE based on a transmission mode, based on an embodiment of the present disclosure.
FIG. 9 shows three cast types, based on an embodiment of the present disclosure.
FIG. 10 shows an example of a DRX cycle according to an embodiment of the present disclosure.
FIG. 11 shows a method in which a LTE that has reserved transmission resource(s) informs another UE of the transmission resource(s), based on an embodiment of the present disclosure.
FIG. 12 shows a procedure for a receiving LTE to transmit an IUC message, according to one embodiment of the present disclosure.
FIG. 13 shows an embodiment in which an LCP procedure is performed, according to one embodiment of the present disclosure.
FIG. 14 shows a procedure for a first device to perform wireless communication, according to one embodiment of the present disclosure.
FIG. 15 shows a procedure for a second device to perform wireless communication, according to one embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### MODE FOR INVENTION

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

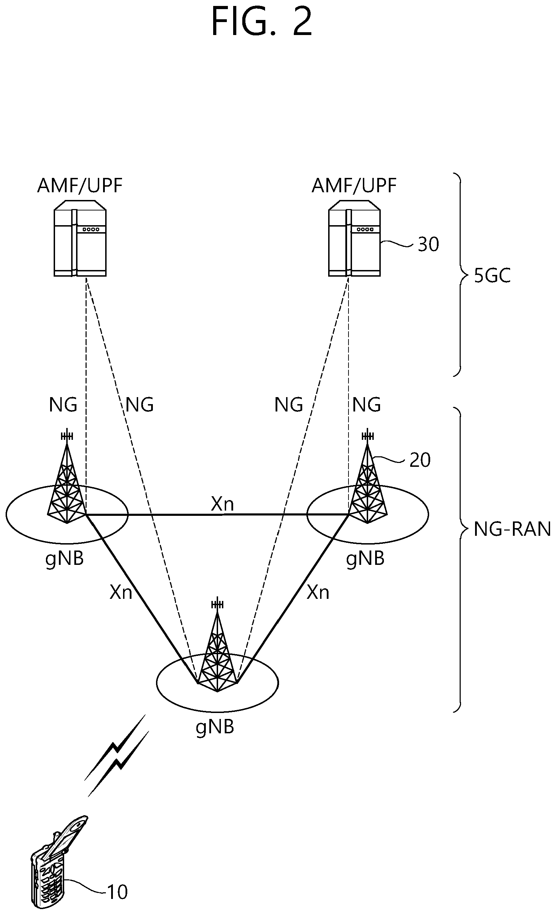

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the LTE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the LTE and the network. For this, the RRC layer exchanges an RRC message between the UE and the BS.

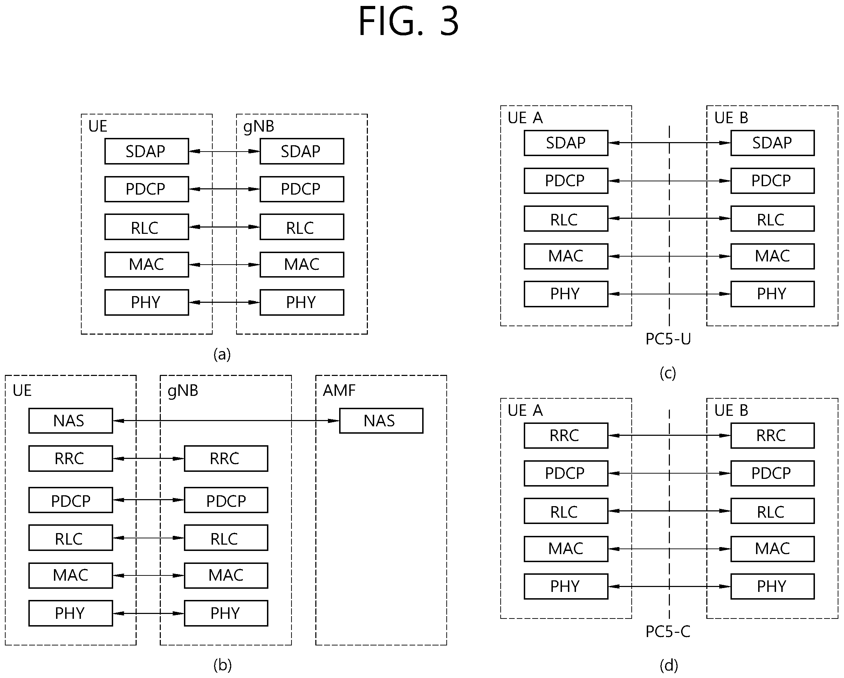

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication, (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the LTE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

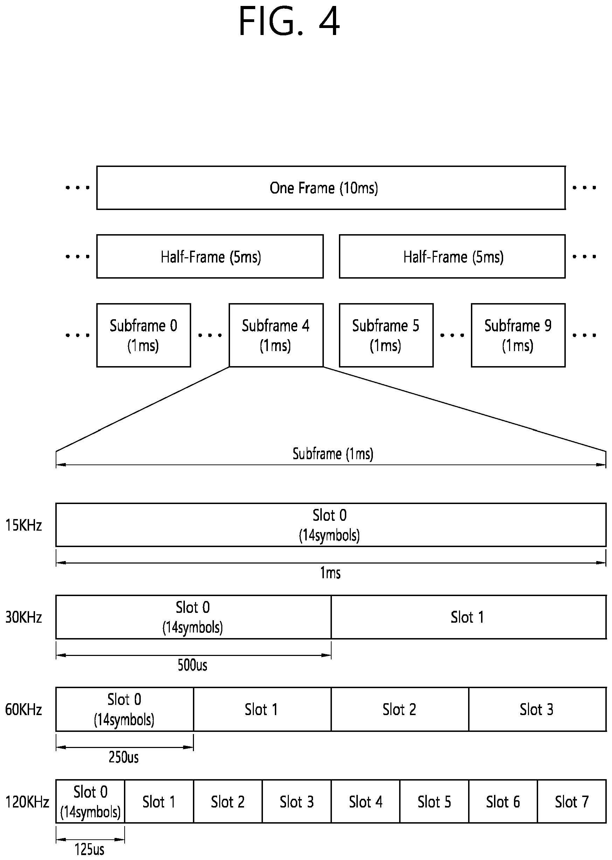

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or interval) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

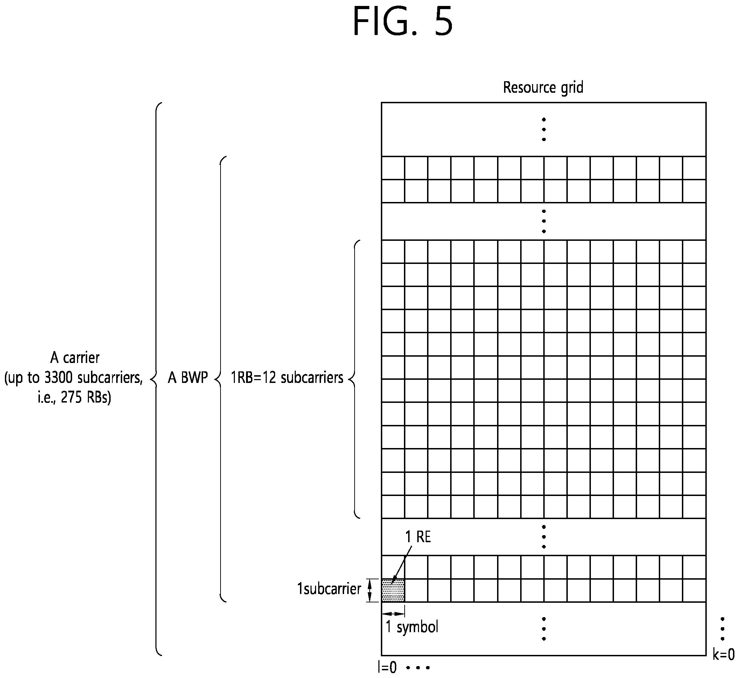

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the LTE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the LTE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting LTE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

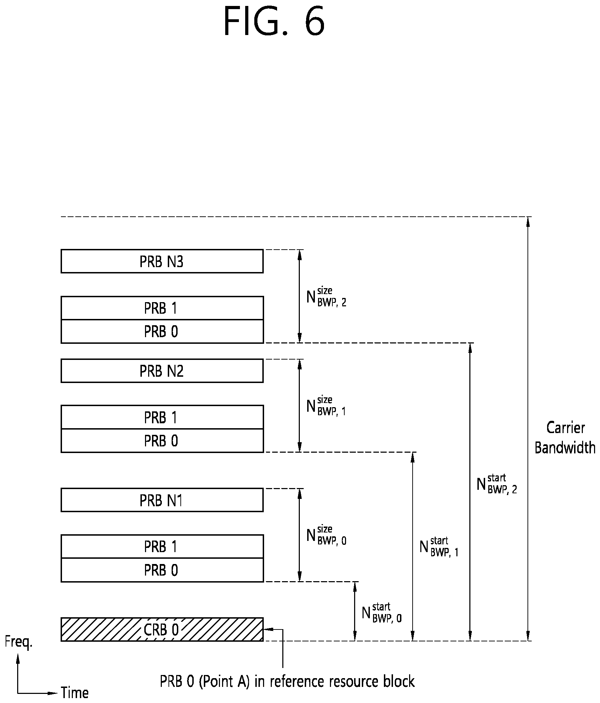

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (LTL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the LTE does not have to perform hypothesis detection at frequency to discover the S-SSB in the carrier.

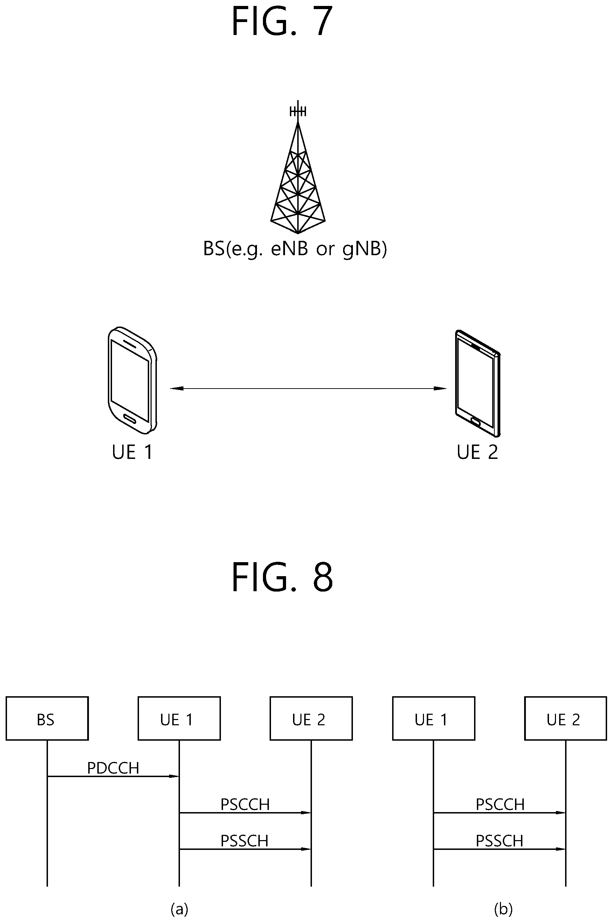

FIG. 7 shows a LTE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a LTE of a user. However, if a network equipment such as a BS transmits/receives a signal according to a communication scheme between UEs, the BS may also be regarded as a sort of the LTE. For example, a LTE 1 may be a first apparatus 100, and a LTE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the LTE 1 is capable of transmitting a signal may be configured to the UE 2 which is a receiving UE, and the signal of the LTE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the LTE 1 of the resource pool, or the LTE 1 may use a pre-configured resource pool.

In general, the resource pool may be configured in unit of a plurality of resources, and each LTE may select a unit of one or a plurality of resources to use it in SL signal transmission thereof.

Hereinafter, resource allocation in SL will be described.

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a LTE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a LTE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the UE for SL transmission. For example, the BS may perform resource scheduling to a LTE 1 through a PDCCH (e.g., downlink control information (DCI)) or RRC signaling (e.g., Configured Grant Type 1 or Configured Grant Type 2), and the LTE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to (b) of FIG. 8, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the LTE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the LTE 2 through a PSCCH, and thereafter may transmit data based on the SCI to the LTE 2 through a PSSCH.

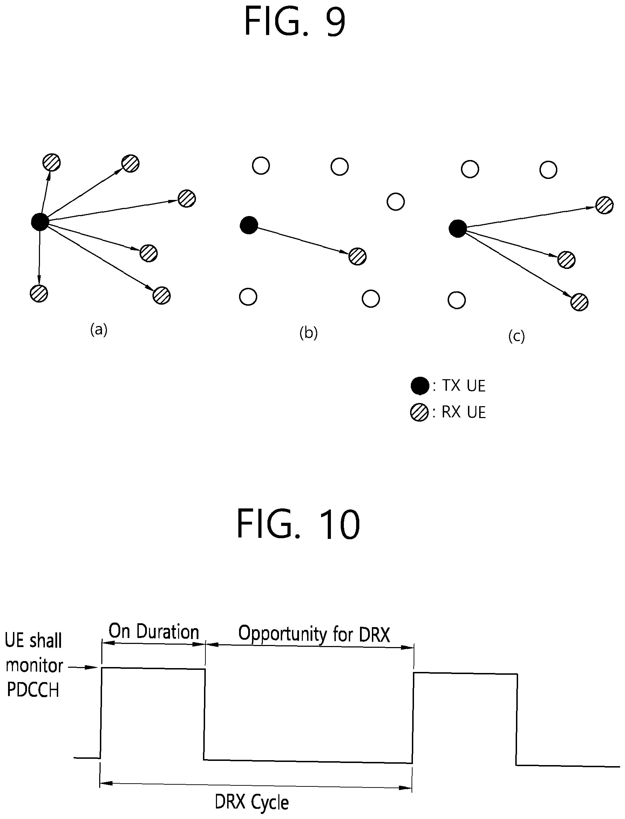

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another LTE. In case of the groupcast-type SL transmission, the LTE may perform SL communication with respect to one or more LTEs in a group to which the LTE belongs. In various embodiments of the present disclosure, SL groupcast communication may be replaced with SL multicast communication, SL one-to-many communication, or the like.

Hereinafter, power saving will be described.

As a power saving technique of at LTE, LTE adaptation to traffic and power consumption characteristics, adaptation according to frequency/time change, adaptation to antenna, adaptation to discontinuous reception (DRX) configuration, adaptation to UE processing capability, adaptation for reduction of PDCCH monitoring/decoding, power saving signal/channel/procedure for triggering adaptation to LTE power consumption, power consumption reduction in RRM measurement, etc. may be considered.

Hereinafter, discontinuous reception (DRX), which is one of techniques capable of realizing UE power saving, will be described.

The procedure of a DRX-related LTE can be summarized as shown in Table 5 below.

**[Table 5]**

| | Type of signals | UE procedure |
|---|---|---|
| Step 1 | RRC signaling (MAC-CellGroupConfig) | - receive DRX configuration information |
| Step 2 | MAC CE((Long) DRX command MAC CE) | - receive DRX command |
| Step 3 | | - monitor PDCCH during on-duration of DRX period |

FIG. 10 shows an example of a DRX cycle according to an embodiment of the present disclosure. The embodiment of FIG. 10 may be combined with various embodiments of the present disclosure.

Referring to FIG. 10, a LTE uses DRX in RRC_IDLE state and RRC INACTIVE state to reduce power consumption. When DRX is configured, a LTE performs DRX operation according to DRX configuration information. A UE operating as DRX repeatedly turns on and off the reception task.

For example, when DRX is configured, a UE attempts to receive a downlink channel PDCCH only within a pre-configured time interval, and does not attempt to receive the PDCCH within the remaining time interval. The time period during which a UE should attempt to receive a PDCCH is called on-duration, and the on-duration period is defined once per DRX cycle.

A LTE may receive DRX configuration information from a gNB through RRC signaling, and may operate as DRX through reception of a (long) DRX command MAC CE.

DRX configuration information may be included in *MAC-CellGroupConfig.* The IE, *MAC-CellGroupConfig,* may be used to configure MAC parameters for a cell group, including DRX.

A DRX command MAC CE or long DRX command MAC CE is identified by a MAC PDU subheader with a logical channel ID (LCID). It has a fixed size of 0 bits.

Table 6 below shows a value of LCID for DL-SCH.

**[Table 6]**

| Index | LCID values |
|---|---|
| 111011 | Long DRX Command |
| 111100 | DRX Command |

The PDCCH monitoring operation of a UE is controlled by DRX and Bandwidth Adaptation (BA). On the other hand, when DRX is configured, a LTE does not need to continuously monitor a PDCCH. On the other hand, DRX has the following characteristics.
- on-duration: This is a period in which a UE waits to receive the next PDCCH after waking up. If a UE successfully decodes a PDCCH, the UE maintains the awake state and starts an inactivity-timer.
- an inactive timer: This is a time interval in which a UE waits for successful PDCCH decoding from the last successful PDCCH decoding, and it is a period in which the UE sleeps again in case of failure. A LTE must restart an inactivity timer after a single successful decoding of a PDCCH for the only first transmission (i.e., not for retransmission).
- a retransmission timer: A time interval during which a retransmission is expected.
- a cycle: It defines the periodic repetition of on-duration and subsequent possible periods of inactivity.

Hereinafter, DRX in a MAC layer will be described. Hereinafter, a MAC entity may be expressed as a LTE or a MAC entity of a LTE.

A MAC entity may be configured by RRC with DRX function for controlling a PDCCH monitoring activity of a UE for a radio network temporary identifier (C-RNTI), CS-RNTI, TPC-PUCCH-RNTI, TPC-PUSCH-RNTI, and TPC-SRS-RNTI of the MAC entity. When using DRX operation, a MAC entity must monitor a PDCCH. In the RRC_CONNECTED state, if DRX is configured, a MAC entity may monitor a PDCCH discontinuously using a DRX operation. Otherwise, a MAC entity must continuously monitor a PDCCH.

RRC controls DRX operation by configuring parameters of DRX configuration information.

If a DRX cycle is configured, an active time includes the following time.
- a running time of *drx-onDurationTimer* or *drx-InactivityTimer* or *drx-RetransmissionTimerDL* or *drx-RetransmissionTimerUL* or *ra-ContentionResolutionTimer*; or
- a time a scheduling request was transmitted on a PUCCH and is pending; or
- a time when a PDCCH indicating new transmission to a C-RNTI of a MAC entity is not received after successful reception of a random access response to a random access preamble not selected by the MAC entity among contention-based random access preambles.

When DRX is configured, a LTE must follow a procedure below.
1> if a MAC PDU is transmitted in a configured uplink grant
2> start the *drx-HARQ-RTT-TimerUL* for the corresponding HARQ process after the first reception of the corresponding PUSCH transmission;
2> stop the *drx-RetransmissionTimerUL* for the corresponding HARQ process.
1> if a *drx-HARQ-RTT-TimerDL* expires:
   2> if the data of the corresponding HARQ process was not successfully decoded:
   3> start the *drx-RetransmissionTimerDL* for the corresponding HARQ process.
1> if a *drx-HARQ-RTT-TimerUL* expires :
   2> start the *drx-RetransmissionTimerUL* for the corresponding HARQ process.
1> if a DRX Command MAC CE or a Long DRX Command MAC CE is received:
   2> stop *drx-onDurationTimer;*
2> stop *drx-InactivityTimer.*
1> if *drx-InactivityTimer* expires or a DRX Command MAC CE is received:
   2> if the Short DRX cycle is configured:
   3> start of restart *drx-ShortCycleTimer*;
3> use the Short DRX Cycle.
2> else:
   3> use the Long DRX cycle.
1> if *drx-ShortCycleTimer* expires:
2> use the Long DRX cycle.
1> if a Long DRX Command MAC CE is received:
   2> stop *drx-ShortCycleTimer;*
2> use the Long DRX cycle.
1> if the Short DRX Cycle is used, and [(SFN × 10) + subframe number] modulo (*drx-ShortCycle*) = (*drx-StartOffset*) modulo (*drx-ShortCycle*); or
1> if the Long DRX Cycle is used, and [(SFN × 10) + subframe number] modulo (*drx-LongCycle*) = *drx-StartOffset*:
2> if *drx-SlotOffset* is configured:
   3> start *drx-onDurationTimer* after *drx-SlotOffset.*
2> else:
   3> start *drx-onDurationTimer.*
1> if the MAC entity is in Active Time:
   2> monitor the PDCCH;
2> if the PDCCH indicates a DL transmission or if a DL allocation is configured:
   3> start the *drx-HARQ RTT TimerDL* for the corresponding HARQ process after the end of the corresponding PUCCH transmission;
3> stop the *drx-RetransmissionTimerDL* for the corresponding HARQ process.
2> if the PDCCH indicates a LTL transmission:
   3> start the *drx-HARQ-RTT-TimerUL* for the corresponding HARQ process after the end of the first reception of the corresponding PUSCH transmission;
3> stop *drx-RetransmissionTimerUL* for the corresponding HARQ process.
2> if the PDCCH indicates a new transmission (DL or UL):
   3> start or restart *drx-InactivityTimer.*
1> else (That is, when it is not a part of the active time):
2> not transmit type-0-triggered SRS.
1> if CSI masking (csi-Mask) is setup by upper layers:
   2> if *drx-onDurationTimer* is not running:
   3> not report CSI on PUCCH.
1> else:
2> if the MAC entity is not in the active time:
   3> not report CSI on PUCCH.

Regardless of whether the MAC entity monitors the PDCCH or not, the MAC entity sends HARQ feedback and type-1-triggered SRS when expected.

If it is not a complete PDCCH time point (i.e., if the active time starts or expires in the middle of the PDCCH time point), the MAC entity does not need to monitor a PDCCH.

In this specification, the wording "configuration or definition" may be interpreted as being (pre)configured (via predefined signaling (e.g., SIB, MAC signaling, RRC signaling)) from a base station or network. For example, "A may be configured" may include "(pre)configuring/defining or notifying A of a base station or network for a LTE". Alternatively, the wording "configure or define" may be interpreted as being previously configured or defined by the system. For example, "A may be configured" may include "A is configured/defined in advance by the system".

Meanwhile, in the specification, a transmitting UE (i.e., TX UE) may be a UE which transmits data to (target) receiving UE(s) (i.e., RX UE(s)). For example, the TX UE may be a UE which performs PSCCH transmission and/or PSSCH transmission. For example, the TX UE may be a UE which transmits SL CSI-RS(s) and/or a SL CSI report request indication to (target) RX UE(s). For example, the TX UE may be a UE which transmits a (pre-defined) reference signal(s) (e.g., PSSCH demodulation reference signal (DM-RS)) and/or SL (L1) RSRP report request indicator, which is/are used for SL (L1) RSRP measurement, to (target) to RX UE(s). For example, the TX UE may be a UE which transmits a (control) channel (e.g., PSCCH, PSSCH, etc.) and/or reference signal(s) (e.g., DM-RS(s), CSI-RS(s), etc.) through the (control) channel, which is/are used for SL radio link monitoring (RLM) operation(s) and/or SL radio link failure (RLF) operation(s) of (target) RX UE(s).

Meanwhile, in the specification, a receiving UE (i.e., RX UE) may be a UE which transmits SL HARQ feedback to transmitting LTE(s) (i.e., TX LTE(s)), based on whether or not data transmitted by TX LTE(s) is decoded successfully and/or whether or not a PSCCH (related to PSSCH scheduling) transmitted by TX UE(s) is detected/decoded successfully. For example, the RX UE may be a UE which performs SL CSI transmission to TX UE(s) based on SL CSI-RS(s) and/or a SL CSI report request indication received from TX UE(s). For example, the RX UE may be a LTE which transmits, to TX LTE(s), an SL (L1) RSRP measurement value measured based on (pre-defined) reference signal(s) and/or SL (L1) RSRP report request indication received from TX LTE(s). For example, the RX LTE may be a LTE which transmits its own data to TX LTE(s). For example, the RX LTE may be a LTE which performs SL RLM operation(s) and/or SL RLF operation(s) based on a (pre-configured) (control) channel and/or reference signal(s) through the (control) channel received from TX LTE(s).

Meanwhile, in the specification, for example, a transmitting LTE may transmit, to a receiving LTE, at least one information among information shown in below, through SCI. Here, for example, a transmitting LTE may transmit, to a receiving UE, at least one information among information shown in below, through first SCI and/or second SCI.
- PSSCH and/or PSCCH related resource allocation information, e.g., the number/positions of time/frequency resources, resource reservation information (e.g., period)
- SL CSI report request indicator or SL (L1) RSRP (and/or SL (L1) RSRQ and/or SL (L1) RSSI) report request indicator
- SL CSI transmission indicator (or SL (L1) RSRP (and/or SL (L1) RSRQ and/or SL (L1) RSSI) information transmission indicator)) (on PSSCH)
- Modulation and Coding Scheme (MCS) information
- Transmit power information
- L1 destination ID information and/or L1 source ID information
- SL HARQ process ID information
- New data indicator (NDI) information
- Redundancy version (RV) information
- (Transmission traffic/packet related) QoS information, e.g., priority information
- SL CSI-RS transmission indicator or information on the number of (to-be-transmitted) SL CSI-RS antenna ports
- Location information of a transmitting LTE or location (or distance region) information of a target receiving UE (for which SL HARQ feedback is requested)
- Reference signal (e.g., DMRS, etc.) related to channel estimation and/or decoding of data to be transmitted through a PSSCH, e.g., information related to a pattern of a (time-frequency) mapping resource of DMRS, rank information, antenna port index information

Meanwhile, in the specification, for example, a PSCCH may be replaced/substituted with at least one of SCI, first SCI (1^{st}-stage SCI), and/or second SCI (2^{nd}-stage SCI). For example, SCI may be mutually replaced/substituted with at least one of a PSCCH, first SCI, and/or second SCI. For example, a PSSCH may be mutually replaced/substituted with second SCI and/or PSCCH.

Meanwhile, in the specification, when the SCI configuration fields are divided into two groups in consideration of the (relatively) high SCI payload size, the first SCI including the first SCI configuration field group may be referred to as a 1st SCI, and the second SCI including the second SCI configuration field group may be referred to as a 2nd SCI. For example, 1^{st} SCI and 2^{nd} SCI may be transmitted through different channels. For example, 1^{st} SCI may be transmitted through PSCCH to a receiving LTE. For example, 2^{nd} SCI may be transmitted through an (independent) PSCCH to a receiving UE, or may be piggybacked and transmitted together with data through a PSSCH.

Meanwhile, in the specification, for example, "configuration" or "definition" may mean a (pre)configuration from a base station or network. For example, "configuration" or "definition" may mean a resource pool-specific (pre) configuration from a base station or a network. For example, a base station or network may transmit information related to "configuration" or "definition" to a LTE. For example, a base station or network may transmit information related to "configuration" or "definition", through a pre-defined signaling, to a UE. For example, the pre-defined signaling may include at least one of an RRC signaling, MAC signaling, PHY signaling, and/or an SIB.

Meanwhile, in the specification, for example, "configuration" or "definition" may mean being designated or configured through a pre-configured signaling between UEs. For example, information related to "configuration" or "definition" may be transmitted and received through a pre-configured signaling between UEs. For example, the predefined signaling may be a PC5 RRC signaling.

Meanwhile, in the specification, for example, "RLF" may be mutually replaced/substituted as at least one of Out-of-Synch (OOS) and/or In-Synch (IS).

Meanwhile, in the specification, for example, a resource block (RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in the specification, for example, operation(s) of a TX LTE to reserve/select/determine retransmission resource(s) may include operation(s) of the TX LTE to reserve/select/determine potential retransmission resource(s) in which actual use is determined based on SL HARQ feedback information received from RX UE(s).

Meanwhile, in the specification, a sub-selection window may be replaced/substituted with a selection window and/or a pre-configured number of resource sets within the selection window, or vice versa.

Meanwhile, in the specification, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a LTE independently selects SL transmission resource(s) in a resource pool pre-configured or configured from a base station or a network. For example, a LTE performing SL communication based on SL MODE 1 may be referred to as a MODE 1 UE or MODE 1 transmitting LTE, and a UE performing SL communication based on SL MODE 2 may be referred to as a MODE 2 LTE or MODE 2 transmitting UE.

Meanwhile, in the specification, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in CG type 1, a grant may be provided by an RRC signaling, and stored as a configured grant. For example, in CG type 2, a grant may be provided by a PDCCH, and may be stored or deleted as a configured grant based on an L1 signaling representing activation of deactivation of a grant. For example, in CG type 1, a base station may allocate periodic resources to a transmitting LTE through an RRC message. For example, in CG type 2, a base station may allocate periodic resources through an RRC message to a transmitting UE, and a base station may dynamically activate or deactivate the periodic resources through DCI.

Meanwhile, in the specification, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, a cast or a cast type may include unicast, groupcast and/or broadcast.

Meanwhile, in the specification, a resource may be replaced/substituted with a slot or a symbol, or vice versa. For example, the resource may include a slot and/or a symbol.

Meanwhile, in the specification, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in the specification, for example, for convenience of description, a (physical) channel used when a receiving LTE transmits at least one of the following information to a transmitting LTE may be referred to as a PSFCH.

### - SL HARQ feedback, SL CSI, SL (L1) RSRP

Meanwhile, in the present disclosure, a Uu channel may include a LTL channel and/or a DL channel. For example, a UL channel may include PUSCH, PUCCH, Sounding Reference Signal (SRS), and the like. For example, a DL channel may include PDCCH, PDSCH, PSS/SSS, and the like. For example, SL channels may include PSCCH, PSSCH, PSFCH, PSBCH, PSSS/SSSS, etc.

Meanwhile, in the present disclosure, sidelink information may include at least one of a sidelink message, a sidelink packet, a sidelink service, sidelink data, sidelink control information, and/or a sidelink transport block (TB). For example, sidelink information may be transmitted via PSSCH and/or PSCCH.

Meanwhile, in the present disclosure, a higher priority may mean a smaller priority value, and a lower priority may mean a greater priority value.

**[Table 7]**

| Service or Logical channel | Priority value |
|---|---|
| Service A or Logical channel A | 1 |
| Service B or Logical channel B | 2 |
| Service C or Logical channel C | 3 |

Referring to Table 7, for example, the priority of Service A or Logical Channel A related to the smallest priority value may be the highest. For example, the priority of service C or logical channel C related to the greatest priority value may be the lowest.

Meanwhile, in NR V2X communication or NR sidelink communication, a transmitting UE may reserve/select one or more transmission resources for sidelink transmission (e.g., initial transmission and/or retransmission), and the transmitting LTE may inform a receiving LTE of information about the location of the one or more transmission resources.

Meanwhile, when performing sidelink communication, a method for a transmitting LTE to reserve or pre-determine transmission resource(s) for receiving UE(s) may be representatively as follows.

For example, the transmitting UE may perform a reservation of transmission resource(s) based on a chain. Specifically, for example, if the transmitting LTE reserves K transmission resources, the transmitting LTE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

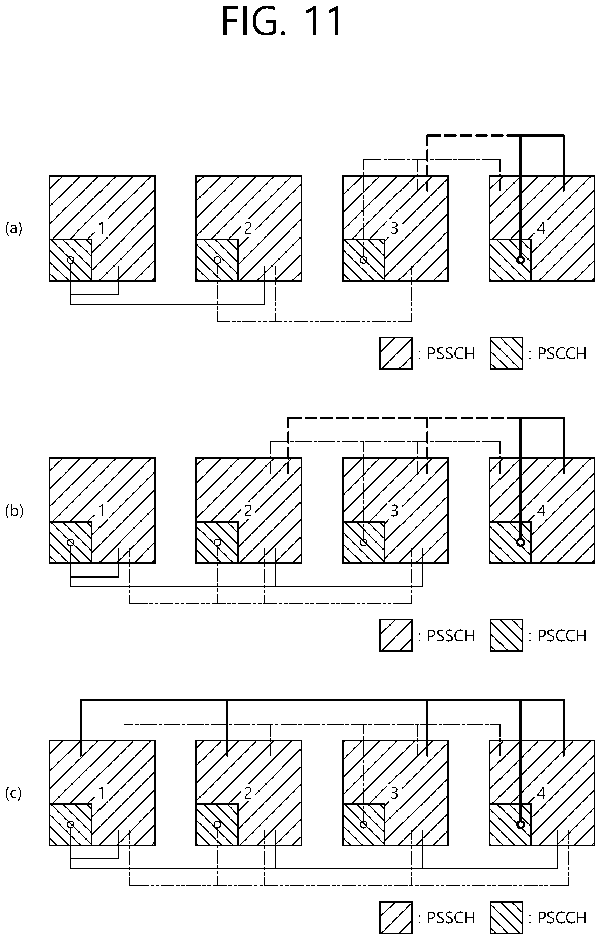

FIG. 11 shows a method in which a LTE that has reserved transmission resource(s) informs another UE of the transmission resource(s), based on an embodiment of the present disclosure. The embodiment of FIG. 11 may be combined with various embodiments of the present disclosure.

Specifically, for example, (a) of FIG. 11 shows a method for performing by a transmitting LTE chain-based resource reservation by transmitting/signaling location information of (maximum) 2 transmission resources to receiving UE(s) through one SCI, in the case of a value of K = 4. For example, (b) of FIG. 11 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 11, the transmitting LTE may transmit/signal only location information of the fourth transmission-related resource to the receiving LTE(s) through the fourth (or last) transmission-related PSCCH. For example, referring to (a) of FIG. 11, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 11, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 11, if the transmitting LTE may transmit/signal to the receiving LTE(s) only location information of the fourth transmission-related resource through the fourth (or last) transmission-related PSCCH, the transmitting LTE may configure or designate a field/bit of location information of unused or remaining transmission resource(s) to a pre-configured value (e.g., 0). For example, in (a) and (b) of FIG. 11, if the transmitting LTE may transmit/signal to the receiving LTE(s) only location information of the fourth transmission-related resource through the fourth (or last) transmission-related PSCCH, the transmitting LTE may be configured or designate a field/bit of location information of unused or remaining transmission resource(s) to a pre-configured status/bit value indicating/representing the last transmission (among 4 transmissions).

Meanwhile, for example, the transmitting LTE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting LTE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 11 shows a method for performing by the transmitting LTE block-based resource reservation, by signaling location information of 4 transmission resources to receiving UE(s) through one SCI, in the case of a value of K = 4.

According to one embodiment of the present disclosure, due to wireless communication characteristics, SL-LTL prioritization (of the receiving LTE) (and/or LTE SL-NR SL prioritization), etc., a transmitting LTE may not be able to (always) be guaranteed a successful reception by a (target) receiving UE of the SCI (and/or PSCCH, and/or PSSCH) it transmitted. For example, the wireless communication characteristics may include interference, fading effects, etc. Furthermore, for example, a (target) receiving UE may not be able to (always) be guaranteed successful transmission/reception of SCI (and/or, PSCCH, and/or, PSSCH) of the transmitting LTE, on a resource reserved/selected through prior SCI (received from a transmitting UE), due to a resource reselection operation based on pre-emption check (and/or re-evaluation) performed by the transmitting UE, SCI (and/or, PSCCH, and/or, PSSCH) transmission omission (and/or, resource reselection) based on SL-LTL prioritization (and/or, LTE SL-NR SL prioritization, and/or, congestion control), etc. Considering above, for example, in the proposed scheme shown below, an efficient SL DRX timer operation scheme between different UEs is proposed.

According to one embodiment of the present disclosure, if a receiving UE fails to decode SCI (and/or PSCCH) on a resource reserved/selected through a prior SCI (received from a transmitting UE) (and/or, if it can't perform a decoding attempt for SCI (and/or, PSCCH)), it may be supposed that an SL DRX timer (e.g., a retransmission (RE-TX) timer, a HARQ RTT timer) is started on the basis of/based on a most recent transmission time point of negative acknowledge (NACK) information (e.g., PSFCH) (based on successful SCI decoding) (within a (past) time window with a pre-configured length) (and/or, omission time point of NACK information (and/or, of a PSFCH transmission)) (related to the same TB (and/or, SL HARQ process)) (RX_NKTIMING). And, for example, the receiving UE may be configured to perform a decoding/monitoring operation (and/or, wake-up operation) for SCI (related to the corresponding TB), based on the supposed SL DRX timer starting time point.

Here, for example, when a rule like this applies, a transmitting UE may suppose that an SL DRX timer (e.g., a retransmission timer, a HARQ RTT timer) (of a receiving UE) is started on the basis of/based on a most recent reception time point of NACK information (TX_NKTIMING) (e.g., a PSFCH) (for the same TB (and/or an SL HARQ process)) from the receiving UE (within a (past) time window with a pre-configured length), if it does not perform an SCI transmission (and/or if it reselects a resource reserved/selected (by itself) through prior SCI (to different time/frequency resource)) to a (target) receiving UE, on a resource reserved/selected (by itself) through the prior SCI, due to a resource reselection operation based on pre-emption check (and/or, re-evaluation), an omission of SCI (and/or, PSCCH, and/or, PSSCH) transmission based on SL-UL prioritization (and/or, LTE SL-NR SL prioritization, and/or, congestion control). And, for example, the transmitting LTE may be configured to select (limitedly) a retransmission resource of SCI (related to the corresponding TB) considering above. Here, for example, if an SL DRX timer on the basis of/based on TX_NKTIMING is expired, the transmitting LTE may be configured to omit a TB transmission (and/or retransmission) (related to the linked SL HARQ process).

Here, for example, TX_NKTIMING may be (limitedly) interpreted/defined as a time point when a PSFCH of (actual) NACK information is successfully received from a (target) receiving UE, or it may be interpreted/defined to include not only a time point when a PSFCH of (actual) NACK information is successfully received from a (target) receiving LTE, but also a time point when a PSFCH cannot be monitored/received due to SL-UL prioritization, etc. That is, for example, TX_NKTIMING may be (limitedly) interpreted/defined not to include a time point when a transmitting LTE cannot monitor/receive a PSFCH from a receiving LTE due to SL-LTL prioritization (and/or, LTE SL-NR SL prioritization, and/or, PSFCH TX-RX prioritization), etc., or, it may also be interpreted/defined to include a time point when a transmitting UE cannot monitor/receive a PSFCH from a receiving UE due to SL-UL prioritization, etc. in addition to a successful reception time point of NACK information.

For example, a transmission of an inter-UE coordination message (IUC message) may be configured to be performed/triggered according to (some of) the rules below.

For example, a pre-configured UE type (e.g., power saving UE, pedestrian UE) may be configured to not perform IUC message transmission (when it has residual (battery) power below a pre-configured threshold level). And/or, for example, for a power saving UE with residual (battery) power above a pre-configured threshold level, it may be configured to wake up (within an (SL DRX) inactive time interval) for sensing operation required to generate an IUC message, etc., even if it receives ACK information (from a target receiving UE).

According to one embodiment of the present disclosure, whether or not to perform reselection check for a reserved/selected (future) resource based on a received IUC message may be configured to be (limitedly) performed only under circumstances where a MAC PDU to be transmitted on the corresponding (future) resource is present/generated (and/or (limitedly) performed only for a reserved/selected (future) resource that is located within a pre-configured time window). For example, the presence/generation of a MAC PDU to be transmitted on a (future) resource may be interpreted as the presence of prioritization information for data to be transmitted through the corresponding (future) resource.

And/or, for example, whether or not to perform reselection check for a reserved/selected (future) resource based on a received IUC message may be configured for a LTE generating/transmitting IUC message to feedback (to the corresponding (target) UE), considering whether there is a resource conflict or not (and/or, whether there is an interference above the pre-configured threshold level), etc., only for a resource which is used for the transmission of (one, and/or, a pre-configured number of) (currently) (generated) MAC PDU(s) (e.g., TB) (which is identified based on SCI decoding) of other (target) UE.

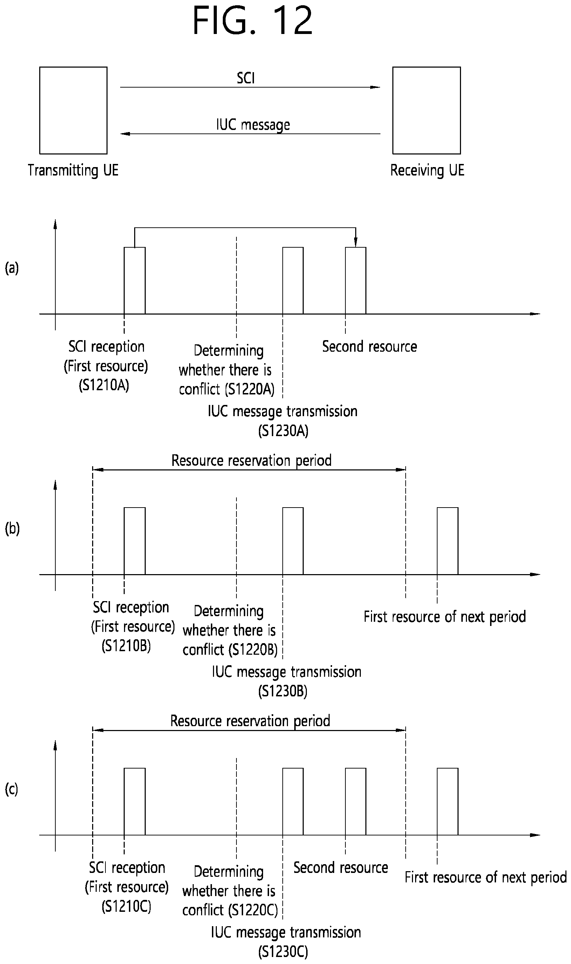

FIG. 12 shows a procedure for a receiving LTE to transmit an IUC message, according to one embodiment of the present disclosure. The embodiment of FIG. 12 may be combined with various embodiments of the present disclosure.

Referring to FIG. 12, a transmitting UE may transmit a SCI to a receiving UE, and the receiving UE may transmit an IUC message to the transmitting UE based on the SCI. For example, based on the IUC message, the transmitting UE may determine whether to perform resource reselection. The SCI may or may not include information related to the next resource and/or resource reservation period information.

For example, referring to (a) of FIG. 12, in step S1210A, a receiving LTE may receive from a transmitting UE SCI including resource information based on a first resource. Here, the resource information may include information related to at least one resource including the first resource and the second resource. For example, the second resource may be an earliest resource following the first resource among the at least one resource. In step S1220A, the receiving UE may determine whether a conflict related to the at least one resource occurs. In step S1230A, the receiving UE may transmit to the transmitting UE, via an IUC message, information related to whether the conflict occurs. Here, the transmitting LTE receiving the IUC message may determine, based on the IUC message, whether to perform resource reselection for the second resource. For example, the transmitting UE, upon receiving the IUC message, may perform resource reselection for the second resource.

For example, referring to (b) of FIG. 12, in step S 1210B, a receiving LTE may receive from a transmitting UE SCI including resource reservation period information based on a first resource. Here, the SCI may not include information related to other resources. In step S 1220B, the receiving UE may determine whether a conflict related to a first resource of a next period occurs. In step S 1230B, the receiving UE may transmit information related to whether the conflict occurs to the transmitting UE, via an IUC message. Here, the transmitting UE receiving the IUC message may determine, based on the IUC message, whether to perform resource reselection for the first resource in the next period. For example, the transmitting UE, upon receiving the IUC message, may perform resource reselection for the first resource of the next period.

For example, referring to (c) of FIG. 12, in step S1210C, a receiving LTE may receive from a transmitting LTE SCI including resource information and resource reservation period information based on a first resource. Here, the resource information may include information related to at least one resource including the first resource and the second resource. For example, the second resource may be an earliest resource following the first resource among the at least one resource. In step S1220C, the receiving UE may determine whether a conflict related to the at least one resource and a first resource in the next period occurs. In step S 1230C, the receiving UE may transmit, via an IUC message, to the transmitting UE information related to whether the collision occurs. Here, the transmitting UE receiving the IUC message may determine, based on the IUC message, whether to perform resource reselection for the second resource. For example, the transmitting UE may receive the IUC message and perform resource reselection for the second resource. That is, if the SCI includes both resource reservation period and resource information and the transmitting LTE receives information related to whether a conflict occurs, the transmitting LTE may perform resource reselection for the second resource, which is a next resource immediately following a resource (the first resource) on which the SCI is transmitted.

For example, an IUC message may be transmitted via a PSFCH. For example, the IUC message may be transmitted separately from HARQ feedback information. For example, from the perspective of a transmitting UE, if there is an overlap between receiving the IUC message and reporting the HARQ feedback information via UL, the reporting of the HARQ feedback information may be prioritized. For example, the transmitting UE may determine, based on the IUC message, whether to perform resource reselection.

According to one embodiment of the present disclosure, when a transmitting LTE performs an LCP procedure for transmitting a MAC PDU to at least one receiving LTE performing an SL DRX operation, the MAC PDU generation/transmission may be configured to be performed based on (available) data related to an LCH with the highest priority among at least one LCH with a destination (ID) related to at least one receiving UE that is an active time (at the resource time point related to an SL grant being generated). That is, for example, when the LCP procedure is performed, if a receiving UE related to a destination ID is in an active time at the resource time point related to an SL grant being generated, MAC PDU generation/transmission may be performed based on the priorities among the LCHs with the destination ID.

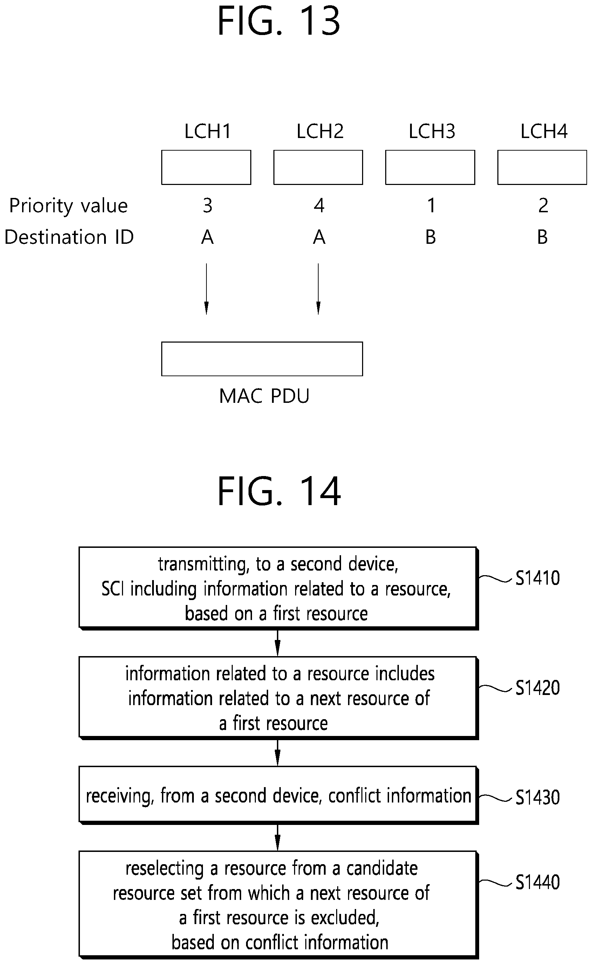

FIG. 13 shows an embodiment in which an LCP procedure is performed, according to one embodiment of the present disclosure. The embodiment of FIG. 13 may be combined with various embodiments of the present disclosure.

Referring to FIG. 13, four LCHs are shown that are targets for performing an LCP procedure. For example, an LCP procedure may refer to a procedure for determining an order of generating MAC PDUs based on, for example, a priority, etc., of at least one of the targeted LCHs. For example, this embodiment describes an LCP procedure performed for LCH1, LCH2, LCH3, and LCH4. For example, this embodiment describes an LCP procedure performed based on an SL DRX configuration that is configured per destination ID related to each LCH, simultaneously with the priority related to each LCH.

For example, the priority value of the available data related to LCH1 may be 3, the priority value of the available data related to LCH2 may be 4, the priority value of the available data related to LCH3 may be 1, and the priority value of the available data related to LCH4 may be 2. In this case, a lower priority value may indicate a higher priority related to it. That is, in this embodiment, the LCH with the highest priority of the related available data among LCH1 through LCH4 may be LCH3.

Here, for example, it is assumed that the destination ID related to LCH1 and LCH2 is A, and the destination ID related to LCH3 and LCH4 is B. Also, for example, it is assumed that the time point at which a MAC PDU to be generated as a result of the LCP performed is transmitted is included in an active time of an SL DRX configuration A related to the A, and at the same time, is not included in an active time of an SL DRX configuration B related to the B. Here, although the priority of LCH3 is the highest as described above, according to this embodiment, if the time point at which the MAC PDU to be generated is transmitted is not included in an active time of an SL DRX configuration related to LCH3, the UE performing the LCP procedure may exclude LCH3, LCH4 from the generation of the MAC PDU. That is, the generated MAC PDU may only include LCH1, LCH2. By doing so, the generated MAC PDU may always be transmitted in an active time of a receiving UE, and SL communication may be performed more efficiently.

According to one embodiment of the present disclosure, between different UEs, via IUC messages (and/or pre-configured higher/physical layer signaling), (transmission and/or reception) resource pool information related to the application of their (or another LTE's) SL DRX operation may be signaled. For example, the resource pool information may include a resource pool index, time/frequency resource location information comprising the resource pool, etc.

For example, whether or not the rule applies (and/or the parameter values related to the proposed method/rules of this disclosure) may be specifically (or, differently, or, independently) configured/allowed for at least one of elements/parameters such as service type (and/or (LCH or service) priority and/or QOS requirements (e.g., latency, reliability, minimum communication range) and/or PQI parameters) (and/or HARQ feedback enabled (and/or disabled)) LCH/MAC PDU (transmission) and/or the CBR measurement value of a resource pool and/or the SL cast type (e.g., unicast, groupcast, broadcast) and/or the SL groupcast HARQ feedback options (e.g., NACK only feedback, ACK/NACK feedback, TX-RX distance-based NACK only feedback) and/or the SL MODE 1 CG type (e.g., SL CG type 1/2) and/or SL mode type (e.g., mode 1/2) and/or whether a resource pool and/or PSFCH resource is configured and/or source (L2) ID (and/or destination (L2) ID) and/or PC5 RRC connection (link) and/or SL link and/or connection state (with base station) (e.g., RRC CONNECTED state, IDLE state, INACTIVE state) and/or the SL HARQ process (ID) and/or whether the SL DRX operation (of a transmitting or receiving UE) is performed and/or whether a UE is power saving (transmitting or receiving) UE and/or (from the perspective of a particular LTE) a case in which a PSFCH transmission and PSFCH RX (and/or multiple PSFCH transmissions (beyond LTE capability)) overlap (and/or PSFCH transmission (and/or PSFCH reception) is omitted) and/or a case in which a receiving UE actually (successfully) receives a PSCCH (and/or PSSCH) (re)transmission from a transmitting LTE.

In addition, the wording " configuration" (or " designation") in this disclosure may be expansively interpreted to mean that a base station informs a UE over a predefined (physical layer or higher layer) channel/signal (e.g., SIB, RRC, MAC CE), and/or that it is provided through a pre-configuration, and/or that a UE informs another UE over a predefined (physical layer or higher layer) channel/signal (e.g., SL MAC CE, PC5 RRC).

Further, in this disclosure, the wording "PSFCH" may be (mutually) expansively interpreted as "(NR or LTE) PSSCH (and/or (NR or LTE) PSCCH) (and/or (NR or LTE) SL SSB (and/or UL channel/signal))".

Furthermore, the proposed methods of the present disclosure may be used in combination with each other and extended (in new forms).

According to an embodiment of the present disclosure, a transmitting UE may check via an IUC message whether there is a conflict for a resource indicated by the transmitting UE via SCI. By doing so, the transmitting UE may perform resource reselection for the resource that is in conflict, and as a result, SL communication may be performed smoothly.

FIG. 14 shows a procedure for a first device to perform wireless communication, according to one embodiment of the present disclosure. The embodiment of FIG. 14 may be combined with various embodiments of the present disclosure.

Referring to FIG. 14, in step S1410, a first device may transmit, to a second device, sidelink control information, SCI, including information related to a resource, based on a first resource. For example, the information related to the resource may include information related to a next resource of the first resource. In step S1420, the first device may receive, from the second device, conflict information. In step S1430, the first device may reselect a resource from a candidate resource set from which the next resource of the first resource is excluded, based on the conflict information.

For example, the information related to the resource may include a resource reservation period.

For example, the information related to the resource may include information related to at least one resource different from the first resource, within the same period as the first resource, and the next resource of the first resource may be a second resource, based on the second resource being an earliest resource following the first resource among the at least one resource.

For example, the next resource of the first resource may be a resource of a next period of the first resource, based on the information related to the resource not including information related to a resource different from the first resource, within the same period as the first resource.

For example, the information related to the resource may not include a resource reservation period.

For example, the information related to the resource may include information related to at least one resource different from the first resource, within the same period as the first resource, and the next resource of the first resource may be a second resource, based on the second resource being an earliest resource following the first resource among the at least one resource.

For example, the conflict information may be generated based on decoding for SCI which a third device transmits.

For example, the conflict information may be generated based on interference related to a resource to be used by the third device to transmit a medium access control, MAC, protocol data unit, PDU.

For example, the next resource of the first resource may be a resource related to one MAC PDU.

For example, the reselection may be performed based on a MAC PDU to be transmitted on the next resource of the first resource being present.

For example, the MAC PDU being present may be determined based on presence of priority information related to the MAC PDU.

For example, the reselection may include: excluding the next resource of the first resource from candidate resource set; and selecting a second resource within the candidate resource set.

For example, the conflict information may be received through an inter-LTE coordination message.

The embodiments described above may be applied to various devices described below. For example, a processor 102 of a first device 100 may control a transceiver 106 to transmit, to a second device 200, sidelink control information, SCI, including information related to a resource, based on a first resource. For example, the information related to the resource may include information related to a next resource of the first resource. And, the processor 102 of the first device 100 may control the transceiver 106 to receive, from the second device 200, conflict information. And, the processor 102 of the first device 100 may reselect a resource from a candidate resource set from which the next resource of the first resource is excluded, based on the conflict information.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: transmit, to a second device, sidelink control information, SCI, including information related to a resource, based on a first resource, wherein the information related to the resource may include information related to a next resource of the first resource; receive, from the second device, conflict information; and reselect a resource from a candidate resource set from which the next resource of the first resource is excluded, based on the conflict information.

For example, the information related to the resource may include a resource reservation period.

For example, the information related to the resource may include information related to at least one resource different from the first resource, within the same period as the first resource, and the next resource of the first resource may be a second resource, based on the second resource being an earliest resource following the first resource among the at least one resource.

For example, the next resource of the first resource may be a resource of a next period of the first resource, based on the information related to the resource not including information related to a resource different from the first resource, within the same period as the first resource.

For example, the information related to the resource may not include a resource reservation period.

For example, the information related to the resource may include information related to at least one resource different from the first resource, within the same period as the first resource, and the next resource of the first resource may be a second resource, based on the second resource being an earliest resource following the first resource among the at least one resource.

For example, the conflict information may be generated based on decoding for SCI which a third device transmits.

For example, the conflict information may be generated based on interference related to a resource to be used by the third device to transmit a medium access control, MAC, protocol data unit, PDU.

For example, the next resource of the first resource may be a resource related to one MAC PDU.

For example, the reselection may be performed based on a MAC PDU to be transmitted on the next resource of the first resource being present.

For example, the MAC PDU being present may be determined based on presence of priority information related to the MAC PDU.

For example, the reselection may include: excluding the next resource of the first resource from candidate resource set; and selecting a second resource within the candidate resource set.

For example, the conflict information may be received through an inter-LTE coordination message.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: transmit, to a second LTE, sidelink control information, SCI, including information related to a resource, based on a first resource, wherein the information related to the resource may include information related to a next resource of the first resource; receive, from the second UE, conflict information; and reselect a resource from a candidate resource set from which the next resource of the first resource is excluded, based on the conflict information.

According to an embodiment of the present disclosure, a non-transitory computer-readable storage medium storing instructions may be proposed. For example, the instructions, when executed, may cause a first device to: transmit, to a second device, sidelink control information, SCI, including information related to a resource, based on a first resource, wherein the information related to the resource may include information related to a next resource of the first resource; receive, from the second device, conflict information; and reselect a resource from a candidate resource set from which the next resource of the first resource is excluded, based on the conflict information.

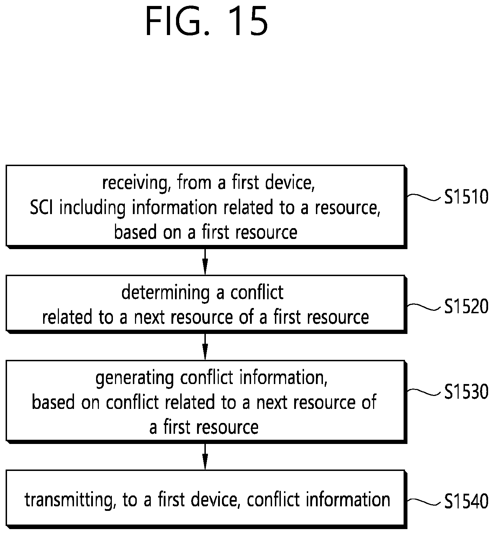

FIG. 15 shows a procedure for a second device to perform wireless communication, according to one embodiment of the present disclosure. The embodiment of FIG. 15 may be combined with various embodiments of the present disclosure.

Referring to FIG. 15, in step S1510, a second device may receive, from a first device, sidelink control information, SCI, including information related to a resource, based on a first resource. For example, the information related to the resource may include information related to a next resource of the first resource. In step S1520, the second device may determine a conflict related to the next resource of the first resource. In step S1530, the second device may generate conflict information, based on the conflict related to the next resource of the first resource. In step S1540, the second device may transmit, to the first device, the conflict information. For example, the next resource of the first resource may be excluded from a candidate resource set, based on the conflict information, and resource reselection may be performed based on the candidate resource set from which the next resource of the first resource is excluded.

For example, the information related to the resource may include information related to at least one resource different from the first resource, within the same period as the first resource, and the next resource of the first resource may be a second resource, based on the second resource being an earliest resource following the first resource among the at least one resource.

The embodiments described above may be applied to various devices described below. For example, a processor 202 of the second device 200 may control a transceiver 206 to receive, from a first device 100, sidelink control information, SCI, including information related to a resource, based on a first resource. For example, the information related to the resource may include information related to a next resource of the first resource. And, the processor 202 of the second device 200 may determine a conflict related to the next resource of the first resource. And, the processor 202 of the second device 200 may generate conflict information, based on the conflict related to the next resource of the first resource. And, the processor 202 of the second device 200 may control the transceiver 206 to transmit, to the first device 100, the conflict information. For example, the next resource of the first resource may be excluded from a candidate resource set, based on the conflict information, and resource reselection may be performed based on the candidate resource set from which the next resource of the first resource is excluded.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: receive, from a first device, sidelink control information, SCI, including information related to a resource, based on a first resource, wherein the information related to the resource may include information related to a next resource of the first resource; determine a conflict related to the next resource of the first resource; generate conflict information, based on the conflict related to the next resource of the first resource; and transmit, to the first device, the conflict information, wherein the next resource of the first resource may be excluded from a candidate resource set, based on the conflict information, and wherein resource reselection may be performed based on the candidate resource set from which the next resource of the first resource is excluded.

For example, the information related to the resource may include information related to at least one resource different from the first resource, within the same period as the first resource, and the next resource of the first resource may be a second resource, based on the second resource being an earliest resource following the first resource among the at least one resource.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

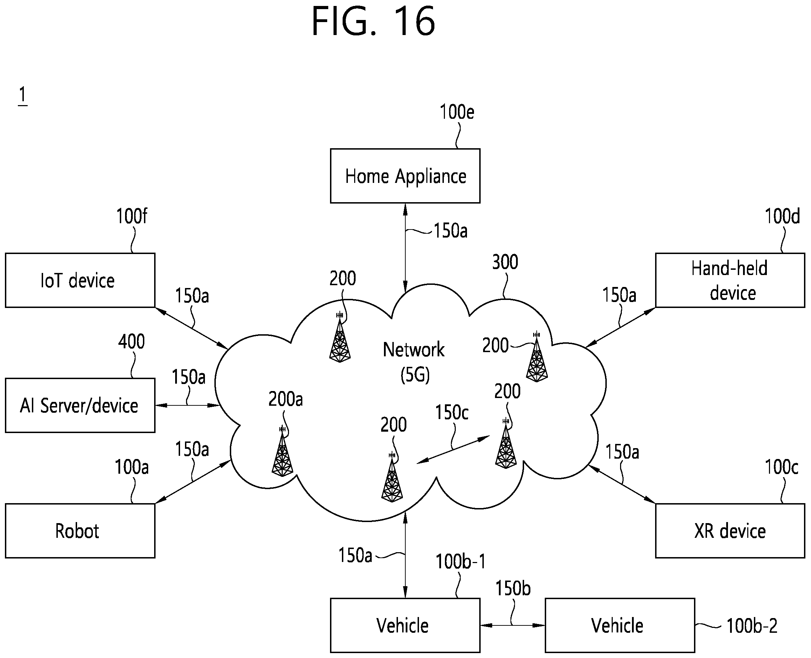

FIG. 16 shows a communication system 1, based on an embodiment of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

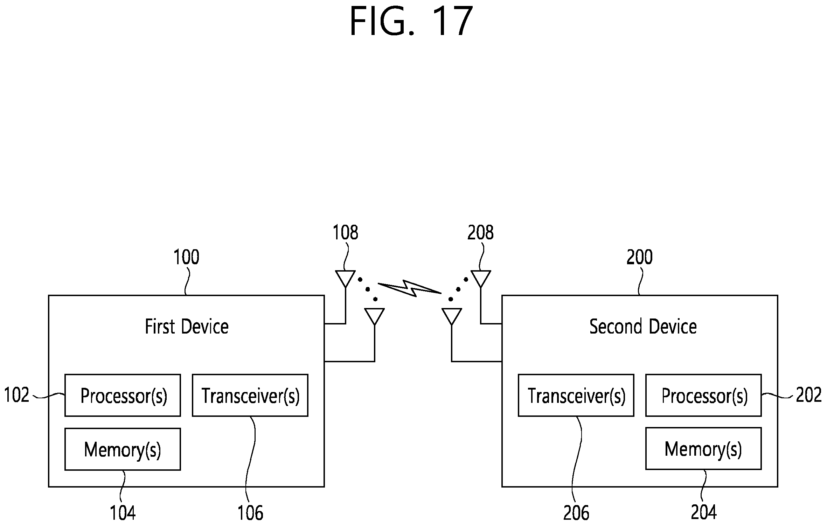

FIG. 17 shows wireless devices, based on an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

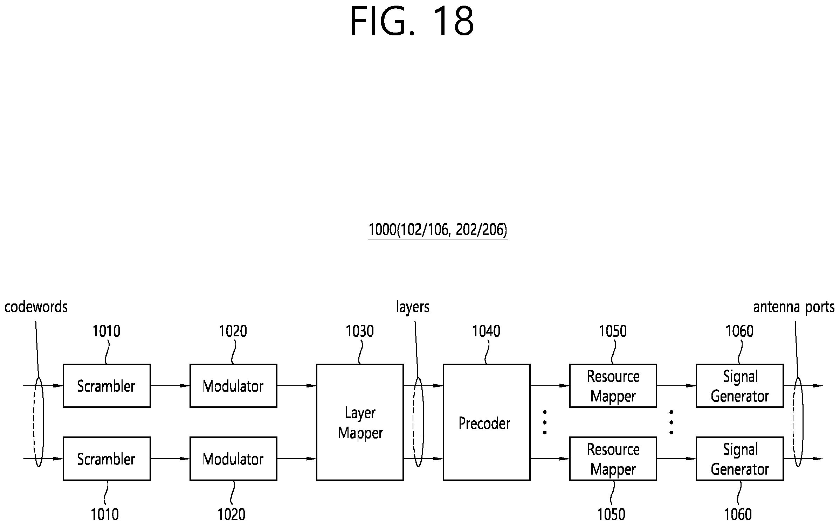

FIG. 18 shows a signal process circuit for a transmission signal, based on an embodiment of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

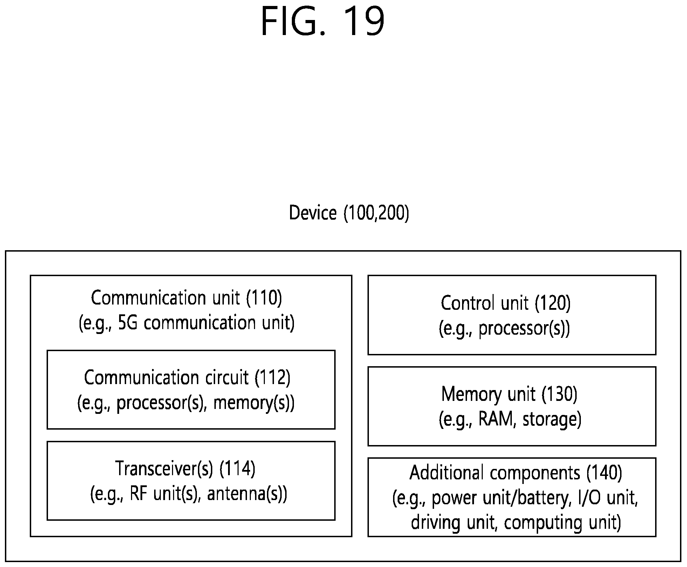

FIG. 19 shows another example of a wireless device, based on an embodiment of the present disclosure. The wireless device may be implemented in various forms according to a use-case/service (refer to FIG. 16).

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

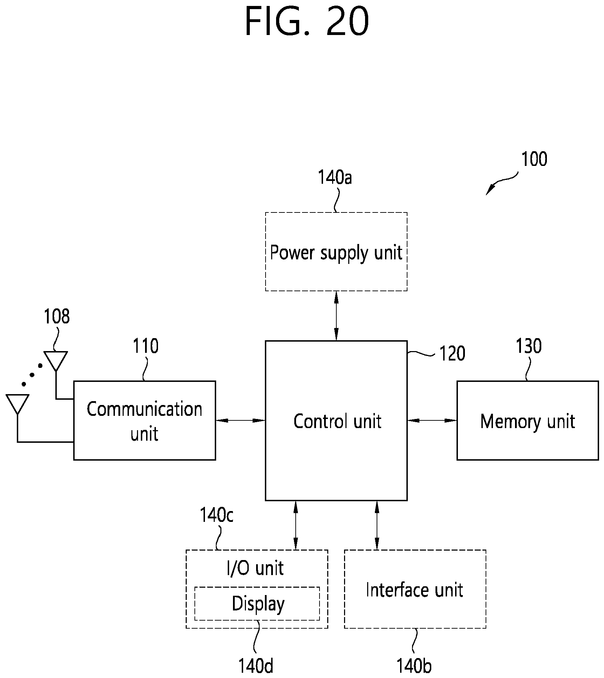

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

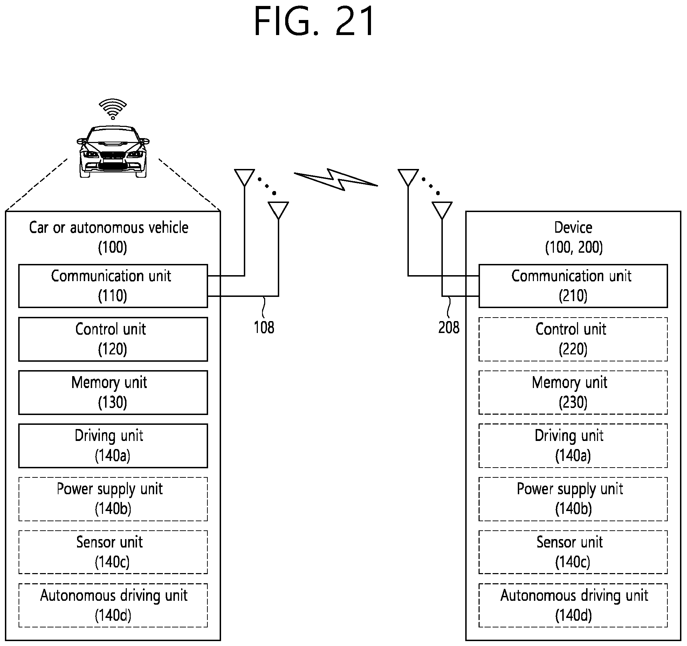

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
transmitting, to a second device, sidelink control information, SCI, including information related to a resource, based on a first resource,
wherein the information related to the resource includes information related to a next resource of the first resource;
receiving, from the second device, conflict information; and
reselecting a resource from a candidate resource set from which the next resource of the first resource is excluded, based on the conflict information.

2. The method of claim 1, wherein the information related to the resource includes a resource reservation period.

3. The method of claim 2, wherein the information related to the resource includes information related to at least one resource different from the first resource, within the same period as the first resource, and
wherein the next resource of the first resource is a second resource, based on the second resource being an earliest resource following the first resource among the at least one resource.

4. The method of claim 2, wherein the next resource of the first resource is a resource of a next period of the first resource, based on the information related to the resource not including information related to a resource different from the first resource, within the same period as the first resource.

5. The method of claim 1, wherein the information related to the resource does not include a resource reservation period.

6. The method of claim 5, wherein the information related to the resource includes information related to at least one resource different from the first resource, within the same period as the first resource, and
wherein the next resource of the first resource is a second resource, based on the second resource being an earliest resource following the first resource among the at least one resource.

7. The method of claim 1, wherein the conflict information is generated based on decoding for SCI which a third device transmits.

8. The method of claim 7, wherein the conflict information is generated based on interference related to a resource to be used by the third device to transmit a medium access control, MAC, protocol data unit, PDU.

9. The method of claim 1, wherein the next resource of the first resource is a resource related to one MAC PDU.

10. The method of claim 1, wherein the reselection is performed based on a MAC PDU to be transmitted on the next resource of the first resource being present.

11. The method of claim 10, wherein the MAC PDU being present is determined based on presence of priority information related to the MAC PDU.

12. The method of claim 1, wherein the reselection includes:
excluding the next resource of the first resource from candidate resource set; and
selecting a second resource within the candidate resource set.

13. The method of claim 1, wherein the conflict information is received through an inter-UE coordination message.

14. A first device for performing wireless communication, the first device comprising:
one or more memories storing instructions;
one or more transceivers; and
one or more processors connected to the one or more memories and the one or more transceivers, wherein the one or more processors execute the instructions to:
transmit, to a second device, sidelink control information, SCI, including information related to a resource, based on a first resource,
wherein the information related to the resource includes information related to a next resource of the first resource;
receive, from the second device, conflict information; and
reselect a resource from a candidate resource set from which the next resource of the first resource is excluded, based on the conflict information.

15. A device adapted to control a first user equipment, LTE, the device comprising:
one or more processors; and
one or more memories operably connectable to the one or more processors and storing instructions, wherein the one or more processors execute the instructions to:
transmit, to a second UE, sidelink control information, SCI, including information related to a resource, based on a first resource,
wherein the information related to the resource includes information related to a next resource of the first resource;
receive, from the second LTE, conflict information; and
reselect a resource from a candidate resource set from which the next resource of the first resource is excluded, based on the conflict information.

16. A non-transitory computer-readable storage medium storing instructions that, when executed, cause a first device to:
transmit, to a second device, sidelink control information, SCI, including information related to a resource, based on a first resource,
wherein the information related to the resource includes information related to a next resource of the first resource;
receive, from the second device, conflict information; and
reselect a resource from a candidate resource set from which the next resource of the first resource is excluded, based on the conflict information.

17. A method for performing, by a second device, wireless communication, the method comprising:
receiving, from a first device, sidelink control information, SCI, including information related to a resource, based on a first resource,
wherein the information related to the resource includes information related to a next resource of the first resource;
determining a conflict related to the next resource of the first resource;
generating conflict information, based on the conflict related to the next resource of the first resource; and
transmitting, to the first device, the conflict information,
wherein the next resource of the first resource is excluded from a candidate resource set, based on the conflict information, and
wherein resource reselection is performed based on the candidate resource set from which the next resource of the first resource is excluded.

18. The method of claim 17, wherein the information related to the resource includes information related to at least one resource different from the first resource, within the same period as the first resource, and
wherein the next resource of the first resource is a second resource, based on the second resource being an earliest resource following the first resource among the at least one resource.

19. A second device for performing wireless communication, the second device comprising:
one or more memories storing instructions;
one or more transceivers; and
one or more processors connected to the one or more memories and the one or more transceivers, wherein the one or more processors execute the instructions to:
receive, from a first device, sidelink control information, SCI, including information related to a resource, based on a first resource,
wherein the information related to the resource includes information related to a next resource of the first resource;
determine a conflict related to the next resource of the first resource;
generate conflict information, based on the conflict related to the next resource of the first resource; and
transmit, to the first device, the conflict information,
wherein the next resource of the first resource is excluded from a candidate resource set, based on the conflict information, and
wherein resource reselection is performed based on the candidate resource set from which the next resource of the first resource is excluded.

20. The second device of claim 19, wherein the information related to the resource includes information related to at least one resource different from the first resource, within the same period as the first resource, and
wherein the next resource of the first resource is a second resource, based on the second resource being an earliest resource following the first resource among the at least one resource.
